# EUROPEAN PATENT APPLICATION

(11) **EP 4 266 247 A1**
(43) Date of publication of application: **25.10.2023**
(21) Application number: 22742819.0
(22) Date of filing: 19.01.2022
(51) Int. Cl.: G06T 7/00, G06T 7/13, G06T 7/73, G06T 5/00, G06T 7/194

(54) **METHOD FOR REFINING TISSUE SPECIMEN IMAGE, AND COMPUTING SYSTEM PERFORMING SAME**

(30) Priority: 20.01.2021 KR 20210008312
(71) Applicant: Deep Bio Inc., Seoul 08380 (KR)
(72) Inventor: CHO, Joon Young, Seoul 08394 (KR); KWAK, Tae Yeong, Seoul 05119 (KR); KIM, Sun Woo, Seongnam-si, Gyeonggi-do 13599 (KR)
(74) Representative: Flügel Preissner Schober Seidel
(86) International application number: PCT/KR2022/000972
(87) International publication number: WO 2022/158843

(57) **Abstract**

Disclosed are a method for refining a tissue image by removing, from a slide image of a tissue specimen, a tissue specimen region determined to be another tissue specimen, and a computer system performing same. According to one aspect of the present invention, provided is a method for refining a tissue specimen image, comprising the steps of: extracting a plurality of contours corresponding to a plurality of tissue regions included in a tissue specimen image; calculating the center point coordinates of each of the extracted plurality of contours; determining a main tissue contour from among the plurality of contours, on the basis of the center point coordinates of the tissue specimen image and the center point coordinates of each of the plurality of contours; and removing a region corresponding to at least a part of the contours other than the main tissue contour among the plurality of contours.

## Description

### Technical Field

The present disclosure relates to a method of refining a biotissue specimen image and a computing system performing the same. More specifically, the present disclosure relates to a method of refining a tissue image in a way to remove a tissue specimen region determined to be another tissue specimen from a slide image of a tissue specimen, and a computing system performing the same.

### Background Art

One of the main tasks performed by the pathology or pathology department is to perform diagnosis to determine the condition or symptom of a specific disease by reading a patient's biotissue slide image. The existing pathology diagnosis method is performed by visually observing and reading the diagnostic pathologic slide image prepared from a specimen by a pathologist through an optical microscope. It may be the beginning of digital pathology to convert, using a microscope camera connected to a computer, pathologic slides into digital images, and then observe and read the image on a monitor. In recent years, with the advent of digital slide scanners, widespread is a method in which the entire pathologic slides are converted into single digital images, to produce in a form of pathologic slide images, followed by observation and reading through a computer monitor.

In addition, in recent years, thanks to the development of machine learning, attempts to automate tasks such as recognizing or classifying images by computer systems have been actively made. In particular, attempts have been made to automate the diagnosis that has been performed by skilled medical personnel using a neural network (e.g., a convolutional neural network (CNN)), which is a type of machine learning, and in general, diagnosis through the neural network that uses biotissue images involves the use of biometric images. In other words, skilled medical personnel annotate a state of a specific disease (e.g., whether a disease is developed) for the biometric images and train the neural network using a plurality of such annotated images as training data.

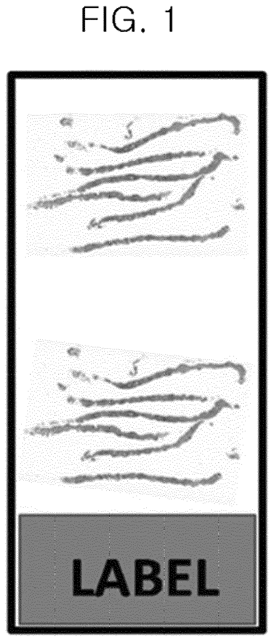

On the other hand, as shown in FIG. 1, there is a case in which pathologic slides are produced by placing a plurality of tissue specimens on a single glass slide, and in the case that the pathologic slides are produced by this method, there is no obstruction in visually examining through an optical microscope. However, when it is digitized to perform analysis through algorithm or artificial intelligence in each tissue specimen unit, another tissue specimen portion may be included in an image to be analyzed, leading to improper training of a diagnostic model or inaccurate analysis outcome. For example, in the case of a pathologic slide image generated on a glass slide prepared by placing multiple biotissues, other tissue specimens may be included due to a limitation or error in the automatic segmentation algorithm in the process of automatically segmenting an image into tissue specimen units. Alternatively, even when manually segmenting the image into tissue specimen units, there is a problem in that another tissue specimen may be included in the same way when the tissue specimen region is specified only in a simple form such as a rectangle or an ellipse.

Therefore, there is a need for a method to check whether the other tissue specimen is included in the image segmented in tissue specimen units to remove the other tissue specimen.

### Disclosure of the Invention

### Technical Goals

A technical object to be achieved by the present disclosure is to provide a method of refining a tissue specimen image in a way to receive a slide image of a tissue specimen to remove a tissue specimen region that is determined to be another tissue specimen, and a computing system performing the same.

### Technical Solutions

According to one aspect of the present disclosure, there is provided a method of refining a tissue specimen image including extracting a plurality of contours corresponding to a plurality of tissue regions included in the tissue specimen image, respectively, calculating center point coordinates of each of the plurality of extracted contours, determining, based on center point coordinates of the tissue specimen image and the center point coordinates of each of the plurality of contours, a main tissue contour among the plurality of contours, and removing a region corresponding to at least a part of the contours other than the main tissue contour among the plurality of contours.

In one embodiment, the determining of, based on the center point coordinates of the tissue specimen image and the center point coordinates of each of the plurality of contours, the main tissue contour among the plurality of contours may include determining a contour having the closest distance between a center point of the contour and a center point of the tissue specimen image among the plurality of contours as the main tissue contour.

In one embodiment, the removing of the region corresponding to at least a part of the contours other than the main tissue contour among the plurality of contours may include determining an boundary-adjacent contour adjacent to an outline of the tissue specimen image among the plurality of contours, and removing a region corresponding to a contour to be removed from the tissue specimen image, wherein the contour to be removed is not the main tissue contour of the boundary-adjacent contour.

In one embodiment, the extracting of the plurality of contours corresponding to the plurality of tissue regions included in the tissue specimen image, respectively, may include generating a binary mask image corresponding to the tissue specimen image in which values of a plurality of tissue regions and non-tissue regions included in the tissue specimen image are classified as binary values, and extracting the plurality of contours based on the binary mask.

In one embodiment, removing of a region corresponding to a contour to be removed from the tissue specimen image may include substituting the region corresponding to the contour to be removed in the tissue specimen image with a background color of the tissue specimen image.

In one embodiment, the removing of the region corresponding to the contour to be removed from the tissue specimen image may further include determining an average color of a region which does not correspond to any one of the plurality of contours in the tissue specimen image as the background color of the tissue specimen image.

According to another aspect of the present disclosure, there is provided a computer program installed in a data processing device and recorded on a non-transitory medium for performing the above-described method.

According to another aspect of the present disclosure, there is provided a non-transitory computer-readable recording medium in which a computer program for performing the above-described method is recorded.

According to another aspect of the present disclosure, there is provided a tissue specimen image refinement system including a processor and a memory configured to store a computer program, wherein the computer program causes, when executed by the processor, the tissue specimen image refinement system to perform a method of refining a tissue specimen image, and the method of refining the tissue specimen image includes extracting a plurality of contours corresponding to a plurality of tissue regions included in the tissue specimen image, respectively, calculating center point coordinates of each of the plurality of extracted contours, determining, based on center point coordinates of the tissue specimen image and the center point coordinates of each of the plurality of contours, a main tissue contour among the plurality of contours, and removing a region corresponding to at least a part of the contours other than the main tissue contour among the plurality of contours.

In one embodiment, the determining of, based on the center point coordinates of the tissue specimen image and the center point coordinates of each of the plurality of contours, the main tissue contour among the plurality of contours may include determining a contour having the closest distance between a center point of the contour and a center point of the tissue specimen image among the plurality of contours as the main tissue contour.

In one embodiment, the removing of the region corresponding to at least a part of the contours other than the main tissue contour among the plurality of contours may include determining an boundary-adjacent contour adjacent to an outline of the tissue specimen image among the plurality of contours, and removing a region corresponding to a contour to be removed from the tissue specimen image, wherein the contour to be removed is not the main tissue contour of the boundary-adjacent contour.

In one embodiment, the extracting of the plurality of contours corresponding to the plurality of tissue regions included in the tissue specimen image, respectively, may include generating a binary mask image corresponding to the tissue specimen image in which values of a plurality of tissue regions and non-tissue regions included in the tissue specimen image are classified as binary values, and extracting the plurality of contours based on the binary mask.

In one embodiment, removing of a region corresponding to a contour to be removed from the tissue specimen image may include substituting the region corresponding to the contour to be removed in the tissue specimen image with a background color of the tissue specimen image.

### Advantageous Effects

According to the technical idea of the present disclosure, it is possible to provide a method of refining a tissue specimen image and a computing system performing the same, in a way to receive a slide image of a tissue specimen to remove a tissue specimen region that is determined to be another tissue specimen.

In addition, through the method of refining a tissue specimen image according to an embodiment of the present disclosure, there is an effect of capable of more accurately training an artificial neural network with a refined image.

### Brief Description of Drawings

In order to more fully understand the drawings cited in the detailed description of the present disclosure, a brief description of each drawing is provided.
FIG. 1 is a diagram illustrating an example of a glass slide on which several specimens are placed.
FIG. 2 is a diagram for describing a schematic system configuration for implementing a method of refining a tissue specimen image in accordance with an embodiment of the present disclosure.
FIG. 3 is a flowchart for describing a method of refining a tissue specimen image in accordance with an embodiment of the present disclosure.
FIG. 4 is a flowchart illustrating an example of step S 100 in FIG. 3.
FIG. 5 is a flowchart illustrating an example of step S120 in FIG. 3.
FIG. 6 is a flowchart illustrating an example of step S130 in FIG. 3.
FIG. 7A is a diagram illustrating an example of a tissue specimen image, FIG. 7B is a diagram illustrating an example of a binary mask image corresponding to the tissue specimen image, and FIG. 7C is an image refined after removing a region corresponding to a contour to be removed from the tissue specimen image in FIG. 7A.
FIG. 8 is a diagram illustrating a schematic configuration of a tissue specimen image refinement system in accordance with an embodiment of the present disclosure.
FIG. 9 is a diagram for describing a schematic configuration of a tissue specimen image refinement system in accordance with an embodiment of the present disclosure.

### Best Mode for Carrying Out the Invention

Since the present disclosure may apply various transformations and have various embodiments, specific embodiments will be illustrated in the drawings and described in detail in the detailed description. However, this is not intended to limit the present disclosure to specific embodiments, and it should be understood to include all transformations, equivalents and substitutes included in the spirit and scope of the present disclosure. In describing the present disclosure, if it is determined that a detailed description of related known technologies may obscure the gist of the present disclosure, the detailed description will be omitted.

Terms such as first and second may be used to describe various components, but the components should not be limited by the terms. Terms such as first and second do not refer to a particular order and are used only for the purpose of distinguishing one component from another.

The terms used in the present application are used only to describe a particular embodiment and are not intended to limit the present disclosure. Singular expressions include plural expressions unless the context clearly dictates otherwise.

In this specification, terms such as "include" or "have" are intended to designate the presence of features, numbers, steps, operations, components, parts, or combinations thereof described in the specification, and it should be understood that it does not preclude the possibility of the presence or addition of one or more other features, numbers, steps, operations, components, parts, or combinations thereof.

In addition, in the present specification, when one component 'transmits' data to another component, it means that the component may directly transmit the data to the other component, and that the data may be transmitted to the other component through at least one other component. Conversely, when one component 'directly transmits' data to another component, it means that the data is transmitted from the component to the other component without going through the other component.

Hereinafter, with reference to the accompanying drawings, the present disclosure will be described in detail based on embodiments of the present disclosure. Like reference numerals presented in each drawing indicate like members.

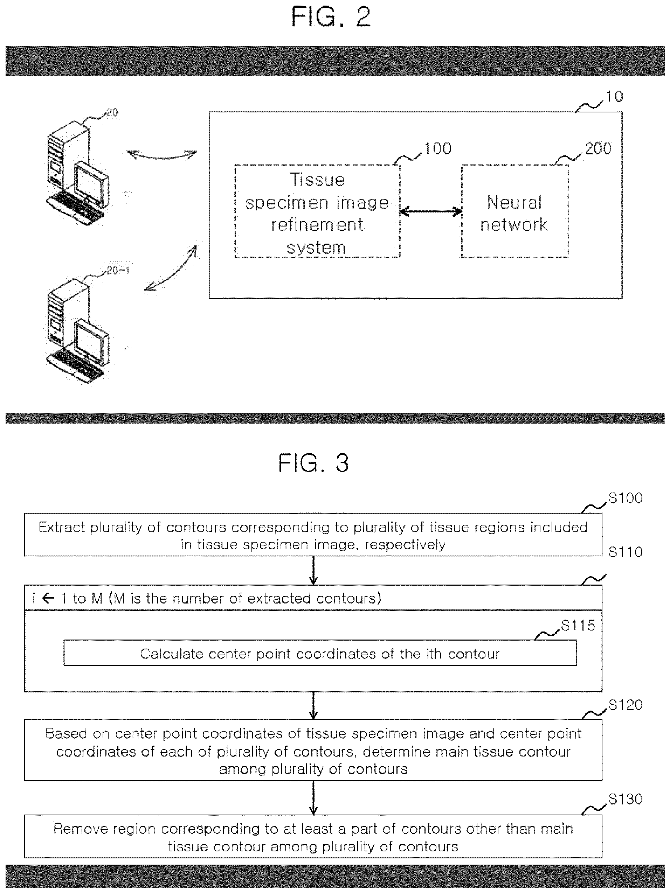

FIG. 2 is a diagram for describing a schematic system configuration for implementing a method of refining a tissue specimen image in accordance with an embodiment of the present disclosure.

Referring to FIG. 2, the method of refining a tissue specimen image according to the technical idea of the present disclosure may be performed by a tissue specimen image refinement system 100.

In one embodiment, the tissue specimen image refinement system 100 may be installed in a predetermined server 10 to implement the technical ideas of the present disclosure. An average expert in the art of the present disclosure will be able to easily infer that the server 10 refers to a data processing device having a calculating ability for implementing the technical ideas of the present disclosure, and in general, any device capable of performing specific services, such as a personal computer and a mobile terminal, as well as a data processing device that is accessible to a client through a network, may be defined as a server.

By inputting a refined tissue specimen image into a predetermined neural network 200, the tissue specimen image refinement system 100 may be configured to train the neural network 200 or allow the pre-trained neural network 200 to make predetermined determination from the tissue specimen image. The neural network 200 may be an artificial neural network to provide diagnostic information, prognostic information, and/or response information to a treatment method for a pathologic specimen, and results output from the neural network 200 may be used to make various determinations about the specimen (e.g., determinations on whether a disease is developed, a prognosis, a treatment method, etc.).

The neural network 200 as an artificially constructed neural network based on the operating principle of human neurons may include a multilayer perceptron model and refer to a set of information expressing a series of designs defining an artificial neural network. The neural network 200 may include, but is not limited thereto, a convolutional neural network (CNN) widely known in the field of artificial intelligence, machine learning, or deep learning.

The server 10, in which the neural network 200 and the tissue specimen image refinement system 100 are included, may be a diagnostic system for diagnosing a disease or a diagnostic assistance system for providing information necessary for a physician to diagnose a disease. An average expert in the art of the present disclosure will be able to easily infer that the neural network 200 and the tissue specimen image refinement system 100 may be provided in a single physical device, that is, the server 10, but may be provided in different physical devices according to an embodiment and may be variously modified as needed.

The diagnostic system 10 may be configured to communicate with predetermined terminals 20, 20-1 to train the neural network 200. The terminals 20, 20-1 may be configured to transmit a plurality of training data to the neural network 200 to train the neural network 200, and the neural network 200 may be trained using the received training data.

In addition, the terminals 20, 20-1 may be configured to output a biometric image to be diagnosed to the diagnostic system 10 in order to perform diagnosis of a disease using the trained neural network 200.

On the other hand, shown in FIG. 2 is an example of the tissue specimen image refinement system 100 that is implemented in the form of a subsystem installed in the server 10, but depending on the embodiment, the tissue specimen image refinement system 100 may be implemented as a single system in an independent form. In this case, the tissue specimen image refinement system 100 may be a computing system that is a data processing device having a computing power for implementing the technical idea of the present disclosure and may generally include a computing device such as a personal computer or a portable terminal as well as a server, which is a data processing device accessible to clients through a network.

The tissue specimen image refinement system 100 may refine the pathologic specimen image.

A tissue specimen or pathologic specimen may be a biopsy taken from various organs of the human body and a biotissue excised by surgery. The tissue specimen image may be a slide image obtained by forming the pathologic specimen in the form of a glass slide, scanning, and converting into a form of a digital image, or an image having subjected to a certain automatic segmentation algorithm or manual segmentation using slide images.

In the process of preparing glass slides with pathologic specimens, there is a case that multiple specimens are placed on one slide, and when the slides thus prepared are converted into digital images, a number of different tissues may be included in a single image. In addition, even if the slide thus prepared is segmented into images of several specimens after conversion, there is a possibility that images of other tissues other than a single main tissue may be included in one image. The tissue specimen image refinement system 100 may refine the tissue image in a way to remove a tissue specimen region determined to be another tissue specimen.

FIG. 3 is a flowchart for describing the method of refining a tissue specimen image in accordance with an embodiment of the present disclosure.

Referring to FIG. 3, the tissue specimen image refinement system 100 may extract a plurality of contours corresponding to each of the plurality of tissue regions included in the tissue specimen image (S100).

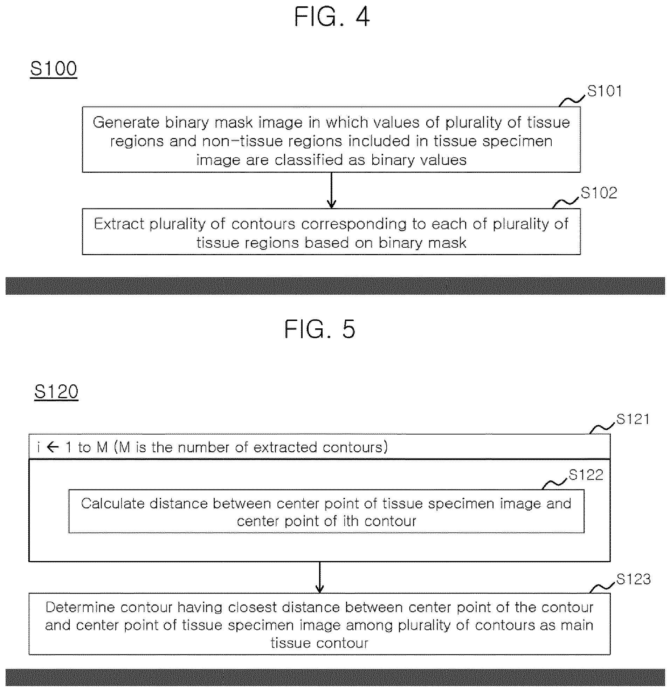

In one embodiment, the tissue specimen image refinement system 100 may extract contours through binary masking, an example of which is shown in FIG. 4.

Referring to FIG. 4, the tissue specimen image refinement system 100 may generate a binary mask image corresponding to the tissue specimen image in which values of a plurality of tissue regions and non-tissue regions included in the tissue specimen image are classified as binary values (S101). For example, the binary mask image may be an image in which a portion with the tissue in the tissue specimen image is configured as 1, and a portion without the tissue as 0.

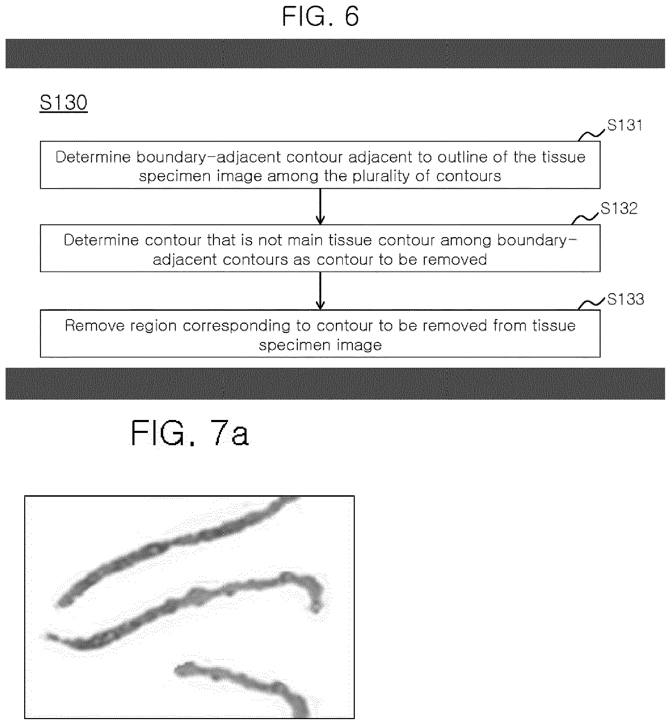

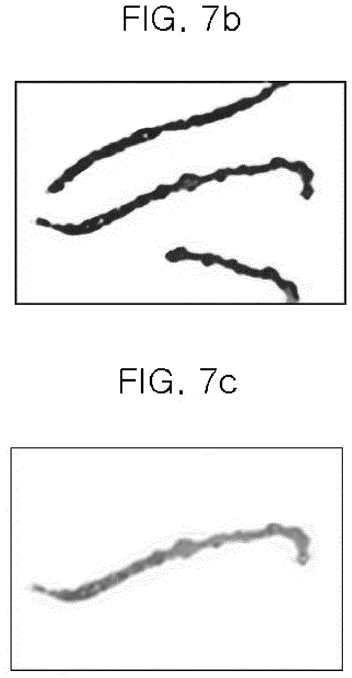

FIG. 7A is a diagram illustrating an example of a tissue specimen image, and FIG. 7B is a diagram illustrating an example of a binary mask image corresponding to the tissue specimen image.

In one embodiment, the tissue specimen image refinement system 100 may specify a biotissue region using a neural network to determine a pre-trained biotissue region, and classify the specified biotissue region from the non-biotissue region to generate a binary mask image, or specify a biotissue region through various known methods.

If the tissue specimen image is an image composed of a hue-saturation-value (HSV) color model, the tissue specimen image refinement system 100 according to an embodiment may generate a binary mask image in the following manner based on the HSV color model.

In one embodiment, the tissue specimen image refinement system 100 may perform image binarization for S space corresponding to the tissue specimen image to generate a first binarized result. In this case, the S space corresponding to the slide is a space consisting of saturation values of the HSV model corresponding to the slide. As an image binarization method, Otsu thresholding may be used. Otsu thresholding is a clustering-based image thresholding technique used in the field of computer vision or image processing.

In addition, the tissue specimen image refinement system 100 may perform image binarization for (1-V) space corresponding to the slide to generate a second binarized result. In this case, V space corresponding to the slide may be a space consisting of brightness values (Value) of the HSV model corresponding to the slide (i.e., a matrix having a magnitude of w×h and consisting of values (brightness values) of the V channel (w is the width of the image, and h is the height of the image)), and the (1-V) space may be a space that has a size of w×h and a value obtained by subtracting the value of the V channel from the matrix filled with 1.

Thereafter, the tissue specimen image refinement system 100 may generate a binary mask image corresponding to the tissue specimen image based on the first binarized result and the second binarized result. The first binarized result and the second binarized result may include binary values (e.g., 0 or 1 or 0 or 255) corresponding to each pixel of the tissue specimen image, and the tissue specimen image refinement system 100 may determine, for each pixel of the tissue specimen image, when the binary value of the first binarized result corresponding to the pixel or the binary value of the first binarized result corresponding to the pixel is 1 (or 255), the pixel on the binary mask image corresponding to the pixel as a tissue pixel (a pixel corresponding to a tissue), and if not, (i.e., when the binary value is 0), determine the pixel on the binary mask image corresponding to the pixel as a non-tissue pixel (a pixel not corresponding to a tissue), so as to generate a binary mask image corresponding to the tissue specimen image. Briefly, the tissue specimen image refinement system 100 may generate a binary mask image through a logical sum calculation between the image binarized result for the S space and the image binarized result for the (1-V) space.

On the other hand, the tissue specimen image refinement system 100 may extract the plurality of contours based on the binary mask (S102).

The tissue specimen image refinement system 100 may extract the plurality of contours based on the binary mask through various known contour extraction methods such as the contour extraction method proposed by Suzuki, S. and Abe. K (Topological Structural Analysis of Digitized Binary Images by Border Following. CVGIP 30 1, pp 32-46 (1985)), and any algorithm capable of extracting a contour consisting of a set of coordinate sequences may be used.

Referring back to FIG. 3, the tissue specimen image refinement system 100 may calculate center point coordinates of each of the plurality of extracted contours. If there are M tissues in the tissue specimen image, the tissue specimen image refinement system 100 may calculate center point coordinates of a first contour to center point coordinates of an M^{th} contour (S 110, S115).

The tissue specimen image refinement system 100 may determine a main tissue contour among the plurality of contours based on the center point coordinates of the tissue specimen image and center point coordinates of each of the plurality of contours (S120).

A more detailed example of step S120 is shown in FIG. 5. Referring to FIG. 5, the tissue specimen image refinement system 100 may calculate the distance between a center point of a tissue specimen image and each contour (i.e., the first contour to the M^{th} contour) (S121, S122).

Thereafter, the tissue specimen image refinement system 100 may determine, as the main tissue contour, a contour having the closest distance between the center point of the contour and the center point of the tissue specimen image among the plurality of contours (S123).

Referring back to FIG. 3, the tissue specimen image refinement system 100 may remove a region corresponding to at least a part of the contours other than the main tissue contour among the plurality of contours (S130).

A specific example of step S130 is shown in FIG. 6. Referring to FIG. 6, the tissue specimen image refinement system 100 may determine an boundary-adjacent contour adjacent to the outline of the tissue specimen image among the plurality of contours (S131).

In addition, the tissue specimen image refinement system 100 may determine a non-main tissue contour among the boundary-adjacent contours as a contour to be removed (S132).

Thereafter, the tissue specimen image refinement system 100 may remove a region corresponding to the contour to be removed from the tissue specimen image (S131).

In one embodiment, the tissue specimen image refinement system 100 may remove a region corresponding to the contour to be removed by substituting the region corresponding to the contour to be removed in the tissue specimen images with the background color of the tissue specimen image, wherein an average color of the region which does not correspond to any one of the plurality of contours may be determined as the background color of the tissue specimen image.

FIG. 7C is an image refined after removing a region (not the main tissue contour among the boundary-adjacent contours) corresponding to a contour to be removed from the tissue specimen image in FIG. 7A.

According to the embodiment, unlike FIG. 6, the tissue specimen image refinement system 100 may remove all specimens other than the main tissue specimen, and remove only the specimen in which the distance between the center point coordinates exceeds a predetermined limit value by comparing the center point coordinates of the contour coordinates corresponding to the main tissue specimen and the center point coordinates of the contours corresponding to each of the remaining specimens.

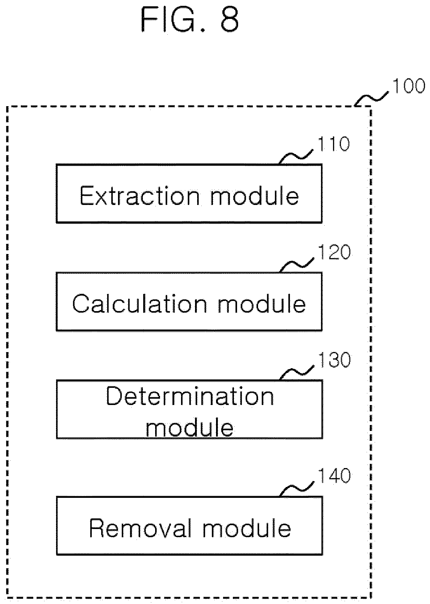

FIG. 8 is a diagram illustrating a schematic configuration of a tissue specimen image refinement system 100 in accordance with an embodiment of the present disclosure.

The tissue specimen image refinement system 100 may refer to a logical configuration having hardware resources and/or software necessary to implement the technical ideas of the present disclosure, but does not necessarily mean one physical component or one device. In other words, the tissue specimen image refinement system 100 may refer to a logical combination of hardware and/or software provided to implement the technical idea of the present disclosure, and if necessary, it may be implemented as a set of logical configurations to implement the technical idea of the present disclosure by being installed in a device spaced apart from each other to perform respective functions. In addition, the tissue specimen image refinement system 100 may refer to a set of configurations separately implemented for each function or role to implement the technical idea of the present disclosure. Each configuration of the tissue specimen image refinement system 100 may be located on a different physical device or on the same physical device. In addition, depending on the embodiment, the combination of software and/or hardware constituting each component of the tissue specimen image refinement system 100 may also be located in each different physical device, and configurations located in each different physical device may be organically combined with each other to implement each of the modules.

In addition, the module as used herein may refer to functional and structural combination of hardware to perform the technical ideas of the present disclosure and software to drive the hardware. For example, an average expert in the art of the present disclosure will be able to easily infer that the module may refer to a predetermined code and a logical unit of hardware resources for performing the predetermined code, and not necessarily mean physically connected code, or a type of hardware.

Referring to FIG. 8, the tissue specimen image refinement system 100 may include an extraction module 110, a calculation module 120, a determination module 130, and a removal module 140. Depending on the embodiment of the present disclosure, some of the above-described components may not necessarily correspond to components essential to the implementation of the present disclosure, and the tissue specimen image refinement system 100 may include more components according to the embodiment. For example, the tissue specimen image refinement system 100 may further include a communication module (not shown) for communicating with an external device, a storage module (not shown) for storing data, and a control module (not shown) for controlling components and resources of the tissue specimen image refinement system 100.

The extraction module 110 may be configured to extract a plurality of contours corresponding to each of the plurality of tissue regions included in the tissue specimen image.

In one embodiment, the extraction module 110 may be configured to generate a binary mask image corresponding to the tissue specimen image in which values of the plurality of tissue regions and non-tissue regions included in the tissue specimen image are classified as binary values, and the plurality of contours may be extracted based on the binary mask.

The calculation module 120 may be configured to calculate center point coordinates of each of the plurality of extracted contours.

The determination module 130 may be configured to determine the main tissue contour among the plurality of contours based on the center point coordinates of the tissue specimen image and the center point coordinates of each of the plurality of contours.

In one embodiment, the determination module 130 may be configured to determine a contour having the closest distance between the center point of the contour and the center point of the tissue specimen image among the plurality of contours as the main tissue contour.

The removal module 140 may be configured to remove a region corresponding to at least a part of the contours other than the main tissue contour among the plurality of contours.

In one embodiment, the removal module 140 may be configured to determine an boundary-adjacent contour adjacent to the outline of the tissue specimen image among the plurality of contours to remove a region corresponding to the contour to be removed from the tissue specimen image. In this case, the contour to be removed may not be the main tissue contour among the boundary-adjacent contours.

In one embodiment, the removal module 140 may be configured to remove a region corresponding to the contour to be removed from the tissue specimen image in a way to substitute a region corresponding to the contour to be removed in the tissue specimen image with the background color of the tissue specimen image. In this case, the background color of the tissue specimen image may be determined as the average color of the region not corresponding to any one of the plurality of contours of the tissue specimen image.

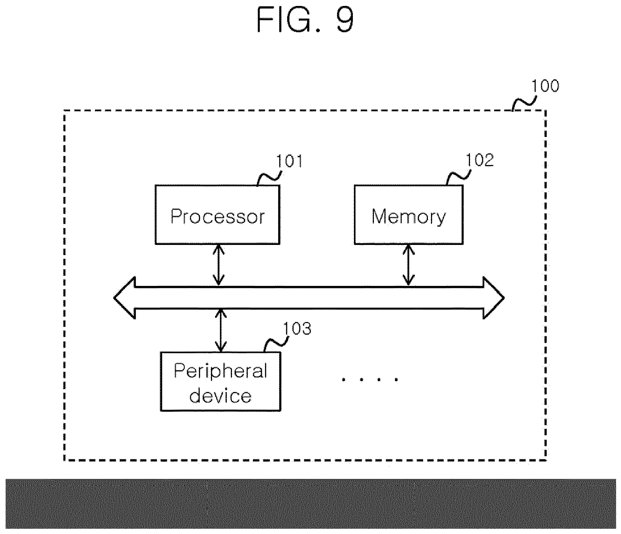

On the other hand, according to an embodiment, the tissue specimen image refinement system 100 may include a processor and a memory configured to store a program executed by the processor. In this case, the tissue specimen image refinement system 100 may have a configuration as shown in FIG. 9. FIG. 9 is a diagram for describing a schematic configuration of the tissue specimen image refinement system 100 in accordance with an embodiment of the present disclosure.

The tissue specimen image refinement system 100 may include a memory 102 in which a program for implementing the technical idea of the present disclosure is stored and a processor 101 for executing the program stored in the memory 102.

An average expert in the art of the present disclosure will be able to easily infer that the processor 101 may be named in various names such as CPU, APU, and mobile processor, according to an embodiment of the tissue specimen image refinement system 100. The processor may include a single-core CPU or a multi-core CPU. In addition, an average expert in the art of the present disclosure will be able to easily infer that the tissue specimen image refinement system 100 may be implemented by being organically combined with a plurality of physical devices, and in this case, at least one processor 101 may be equipped for each physical device to implement the tissue specimen image refinement system 100 of the present disclosure.

The memory 102 may be implemented as any type of storage device in which the program is stored and which is accessible by the processor to run the program. The memory 102 may include a high-speed random access memory and include a non-volatile memory such as one or more magnetic disk storage devices, flash memory devices, or other non-volatile solid-state memory devices. Access to memory by the processor and other components may be controlled by a memory controller. In addition, according to an embodiment in a hardware form, the memory 102 may be implemented as a plurality of storage devices rather than any one storage device. In addition, the memory 102 may include not only the main memory device but also the temporary memory device. It may also be implemented as a volatile memory or a non-volatile memory and defined in a sense of including any type of information storage means implemented to store the program and be driven by the processor.

The program may allow, when executed by the processor 101, the tissue specimen image refinement system 100 to perform the method of refining a tissue specimen image described above.

On the other hand, the method according to an embodiment of the present disclosure may be implemented in the form of a computer-readable program command and stored on a non-transitory computer-readable recording medium, and a control program and a target program according to an embodiment of the present disclosure may also be stored in a non-transitory computer-readable recording medium. A non-transitory computer-readable recording medium includes all types of recording devices in which data that may be read by a computer system is stored.

Program commands recorded on a non-transitory recording medium may be specifically designed and configured for the present disclosure or may be known and available to those skilled in the software field.

Examples of a non-transitory computer-readable recording medium include magnetic media such as hard disks, floppy disks, and magnetic tapes, optical media such as CD-ROMs and DVDs, magneto-optical media such as floptical disks, and hardware devices specifically configured to store and execute program commands such as ROMs, RAM, and flash memory. In addition, the non-transitory computer-readable recording medium is distributed in computer systems connected through a network, so that computer-readable codes may be stored and executed in a distributed manner.

Examples of program commands include machine codes such as those generated by compilers, as well as devices that electronically process information using interpreters, such as high-level language code that may be executed by a computer.

The above-described hardware device may be configured to operate as one or more software modules to perform the operation of the present disclosure, and vice versa.

The foregoing description of the present disclosure is for illustrative purposes only, and a person skilled in the art to which the present disclosure pertains will be able to understand that it may be easily transformed into other concrete forms without changing the technical idea or essential features of the present disclosure. Therefore, the embodiments described above should be understood as exemplary and not limited in all respects. For example, each component described as a single type may be implemented in a distributed form, and likewise components described as a distributed form may be implemented in a combined form.

The scope of the present disclosure is indicated by the claims to be described later rather than by the above detailed description, and the meaning and scope of the claims and all modifications or modified forms derived from the concept of equivalence thereof should be construed as included in the scope of the present disclosure.

### Industrial Applicability

The present disclosure may be used for a method of refining a tissue specimen image and a computing system performing the same.

## Claims

1. A method of refining a tissue specimen image, the method comprising:
extracting a plurality of contours corresponding to a plurality of tissue regions included in the tissue specimen image, respectively;
calculating center point coordinates of each of the plurality of extracted contours;
determining, based on center point coordinates of the tissue specimen image and the center point coordinates of each of the plurality of contours, a main tissue contour among the plurality of contours; and
removing a region corresponding to at least a part of the contours other than the main tissue contour among the plurality of contours.

2. The method of claim 1, wherein the determining of, based on the center point coordinates of the tissue specimen image and the center point coordinates of each of the plurality of contours, the main tissue contour among the plurality of contours comprises determining a contour having the closest distance between a center point of the contour and a center point of the tissue specimen image among the plurality of contours as the main tissue contour.

3. The method of claim 1, wherein the removing of the region corresponding to at least a part of the contours other than the main tissue contour among the plurality of contours comprises:
determining a boundary-adjacent contour adjacent to an outline of the tissue specimen image among the plurality of contours; and
removing a region corresponding to a contour to be removed from the tissue specimen image, wherein the contour to be removed is not the main tissue contour of the boundary-adjacent contour.

4. The method of claim 1, wherein the extracting of the plurality of contours corresponding to the plurality of tissue regions included in the tissue specimen image, respectively, comprises:
generating a binary mask image corresponding to the tissue specimen image in which values of a plurality of tissue regions and non-tissue regions included in the tissue specimen image are classified as binary values; and
extracting the plurality of contours based on the binary mask image.

5. The method of claim 3, wherein removing of a region corresponding to a contour to be removed from the tissue specimen image comprises substituting the region corresponding to the contour to be removed in the tissue specimen image with a background color of the tissue specimen image.

6. The method of claim 5, wherein the removing of the region corresponding to the contour to be removed from the tissue specimen image further comprises determining an average color of a region which does not correspond to any one of the plurality of contours in the tissue specimen image as the background color of the tissue specimen image.

7. A computer program installed in a data processing device and recorded on a non-transitory medium for performing the method according to any one of claims 1 to 6.

8. A non-transitory computer-readable recording medium in which a computer program for performing the method according to any one of claims 1 to 6 is recorded.

9. A tissue specimen image refinement system comprising:
a processor; and
a memory configured to store a computer program,
wherein the computer program causes, when executed by the processor, the tissue specimen image refinement system to perform a method of refining a tissue specimen image, and
the method of refining the tissue specimen image comprises:
extracting a plurality of contours corresponding to a plurality of tissue regions included in a tissue specimen image, respectively;
calculating center point coordinates of each of the plurality of extracted contours;
determining, based on center point coordinates of the tissue specimen image and the center point coordinates of each of the plurality of contours, a main tissue contour among the plurality of contours; and
removing a region corresponding to at least a part of the contours other than the main tissue contour among the plurality of contours.

10. The tissue specimen image refinement system of claim 9, wherein the determining of, based on the center point coordinates of the tissue specimen image and the center point coordinates of each of the plurality of contours, the main tissue contour among the plurality of contours comprises determining a contour having the closest distance between a center point of the contour and a center point of the tissue specimen image among the plurality of contours as the main tissue contour.

11. The tissue specimen image refinement system of claim 9, wherein the removing of the region corresponding to at least a part of the contours other than the main tissue contour among the plurality of contours comprises:
determining an boundary-adjacent contour adjacent to an outline of the tissue specimen image among the plurality of contours; and
removing a region corresponding to a contour to be removed from the tissue specimen image, wherein the contour to be removed is not the main tissue contour of the boundary-adjacent contour.

12. The tissue specimen image refinement system of claim 9, wherein the extracting of the plurality of contours corresponding to the plurality of tissue regions included in the tissue specimen image, respectively, comprises:
generating a binary mask image corresponding to the tissue specimen image in which values of a plurality of tissue regions and non-tissue regions included in the tissue specimen image are classified as binary values; and
extracting the plurality of contours based on the binary mask image.

13. The tissue specimen image refinement system of claim 11, wherein removing of a region corresponding to a contour to be removed from the tissue specimen image comprises substituting the region corresponding to the contour to be removed in the tissue specimen image with a background color of the tissue specimen image.
